(19)

Europäisches Patentamt
European Patent Office
Office européen des brevets

(11) **EP 2 795 344 B1**

(12) **EUROPEAN PATENT SPECIFICATION**

(45) Date of publication and mention
of the grant of the patent:
**26.07.2017 Bulletin 2017/30**

(51) Int Cl.:
*G01P 5/26* (2006.01)        *G01S 17/58* (2006.01)
*G01S 17/95* (2006.01)        *G01S 7/481* (2006.01)

(21) Application number: **12816267.4**

(22) Date of filing: **19.12.2012**

(86) International application number:
**PCT/EP2012/076207**

(87) International publication number:
**WO 2013/092746 (27.06.2013 Gazette 2013/26)**

(54) **A SINGLE LASER ALL-FIBRE BASED OPTICAL SENSOR AND SWITCHING SYSTEM AND METHOD FOR MEASURING VELOCITY IN ATMOSPHERIC AIR FLOW**

EINZELLASER FASERBASIERTES OPTISCHES SENSOR- UND UMSCHALTSYSTEM UND VERFAHREN ZUR MESSUNG VON GESCHWINDIGKEITEN IN ATMOSPHÄRISCHEN LUFTSTRÖMUNGEN

SYSTÈME DE CAPTEUR ET DE COMMUTATION OPTIQUE À LASER UNIQUE À BASE DE FIBRE ET PROCÉDÉ DE MESURE DE VITESSE DANS L'ÉCOULEMENT D'AIR ATMOSPHÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2011   US 201161577261 P
19.12.2011   EP 11194352**

(43) Date of publication of application:
**29.10.2014   Bulletin 2014/44**

(73) Proprietor: **Danmarks Tekniske Universitet
2800 Lyngby (DK)**

(72) Inventors:
 • **MIKKELSEN, Torben, Krogh
DK-3050 Humlebæk (DK)**

 • **KRISTENSEN, Leif
DK-4000 Roskilde (DK)**
 • **DELLWIK, Ebba
DK-4000 Roskilde (DK)**
 • **MANN, Jacob
DK-2000 Frederiksberg (DK)**

(74) Representative: **Zacco Denmark A/S
Arne Jacobsens Allé 15
2300 Copenhagen S (DK)**

(56) References cited:
**WO-A1-03/048804        WO-A1-2009/134221
US-A1- 2011 106 324     US-B1- 6 646 725**

## Description

### FIELD OF INVENTION

The present invention relates to accurate velocity measurement of tracer particles, and particularly to a system and a method for measuring a two- or three-dimensional wind velocity, such as a single laser optical sensor and switching system and method for measuring velocity in atmospheric air flow, and especially for in-situ calibration of mast-mounted anemometers in atmospheric wind flow.

### BACKGROUND OF THE INVENTION

Traditionally, wind velocity is measured using anemometry, for example by using acoustic devices such as sonic anemometers or mechanical rotating cup anemometers in combination with wind directional sensors, such as wind vanes. Especially the renewable energy sector makes widespread use of such anemometers and wind vanes for wind measurements as they are inexpensive and robust. The cup anemometers are typically installed on a boom mounted horizontally on a mast, and the precision of these mast-mounted sonic and mechanical cup anemometers and wind vane devices are inevitably influenced by flow distortion from the mounting boom and the mast itself. To achieve the most exact wind measurement, the anemometer should preferably be mounted on a vertical pole clear of the top of the mast or separated as far much as possible from the mast, depending on mast type and mast diameter.

However, this is rarely neither practical nor desirable, and also the boom itself may obstruct the flow. The anemometers require repeated calibration for providing accurate measurements, and these calibrations are typically performed in precision calibrated wind tunnels where the flow distortion due to mast and boom are either not accounted for. However, the mast flow distortion effect from the mast and boom on the cup anemometer measurements may result in significant errors on the wind measurements, thus leading to inaccurate in-field wind measurements. This may lead to uncertainty for the wind energy resource assessment and to uncertainties in power force measurements for wind turbines. Furthermore, the anemometer calibration procedures involved with wind tunnel certification is often problematic as it is well known that different wind tunnels and different wind tunnel calibration methods provide different calibration results.

Calibration using optical methods is well-known in the art and a calibration system using laser Doppler anemometry is well-known, cf. Dantec Dynamics Flow Lite LDA system. This measurement system and method is based on Laser Doppler Anemometry (LDA). In LDA, the fluid velocity projected at transverse angle(s) to the emitted laser beam(s) is detected. The LDA wind speed or transverse wind component is measured in the intensity interference pattern created by crossing two laser beams of slightly different wavelengths. Thus, an interference pattern in the flow field in front of the LDA is created. Light back-scattered from seed particles immerged in the fluid are detected, and the peak in the coherence frequency of the back-scattered light is proportional to the cross beam fluid velocity at the measurement point. To measure the three-dimensional fluid velocity vectors, three telescopes each emitting beams of two slightly different wavelengths must be directed at oblique angles towards the measurement volume. The measurement range may typically be performed between in an area of from a few centimetres and up to a meter in front of the LDA telescope probes.

In WO 2009/134221, a laser dobbler velocimeter for measuring the velocity of winds or solid objects is disclosed. A laser dobbler velocimeter using more than one telescope is described, and all telescopes are adapted to transmit a beam of light within a target region simultaneously allowing for simultaneous velocity measurements along a plurality of different axes, thus allowing for multi-dimensional velocity determination. A laser beam emitted from a laser source is split, the beam is shaped, frequency shifted and provided to each telescope where after each beam is finally amplified in each telescope immediately before being emitted.

WO09134221 A1 discloses a laser Doppler velocimeter formed using a fiber laser as the lasing medium. Within the velocimeter, all optical signals, transmitted and received, are conveyed by optical fibers. An amplifier amplifies a source laser, which is then transmitted to one or more transceivers. The one or more transceivers, each projecting along a different axis, and each with a single optical fiber input/output interface act as both the transmission device to focus the radiation at a target region, and as the receiving system for collecting reflected radiation. The transceivers each include an amplifier to further amplify the radiation received from the laser source. The one or more transceivers transmit radiation simultaneously to the target region, and may be located remotely from the laser source. The portion of the reflected radiation collected by the receiving system is analyzed to determine the Doppler shift caused by targets at the focal point of the one or more transceivers.

WO03048804 A1 discloses a coherent laser radar device which comprises a laser source (11), and two or more transceivers (84). The two or more transceivers are optically connected to the laser source by optical fibre cables (42, 48, 82) that are routed through an optical routing means (80). A detection means (27) is also provided, and radiation received by the two or more transceivers (84) can also be optically coupled to the detection means (27) by optical fibre cables (82, 86, 90). The device allows multiple transceivers (84) to be located away from central unit (64) of the device.

US2011106324A discloses a system for monitoring wind characteristics in a volume including a plurality of non-coherent laser anemometers operative to measure wind characteristics in a plurality of corresponding sub-volumes located within the volume and a data processing subsystem operative to receive data from the plurality of non-coherent laser anemometers and to provide output data representing the wind characteristics in the volume.

US6646725B discloses a system for measuring components of the velocity of wind along two axes that are transverse to the line of sight of the system and which includes first and second light emitter arrays disposed along crossed first and second axes, respectively, for illuminating the distribution with light, a detector for receiving light backscattered from the distribution, and a controller to activate the arrays, receive detector signals, and calculate the projections of the velocity of the distribution onto the first and second axes. The light emitters of each array can be positioned at irregular distances and provide the system with the capability of discerning the direction of movement of the distribution along the two axes

It is a disadvantage that the wind tunnel calibration of cup anemometers and similar in situ type anemometry is typically not accurate enough to serve the calibration requirements within wind energy and boundary layer meteorology, even though mast flow distortion correction methodologies based on CFD models are implemented.

It is a further disadvantage that the apparatuses as known are expensive devices.

SUMMARY OF THE INVENTION

It is an object of the present invention to provide a method and a system for measuring wind using remote wind vector sensing to overcome one or more of the disadvantages of the conventional methods as mentioned above.

According to the present invention, a system for measuring a velocity of tracer particle motion in a fluid for providing an estimate of fluid velocity is provided. The system comprises at least one laser emitter configured to emit a continuous-wave laser beam and a plurality of optical devices. The system further comprises a switching device configured to receive the continuouswave laser beam and switch the continuous-wave laser beam sequentially to each of the plurality of optical devices. Each of the plurality of optical devices is configured to focus the continuous wave laser beam received from the switching device onto a focus volume, and comprises a focusing arrangement. Each of the optical devices may further comprise an optical output port configured to emit the continuous-wave laser beam towards the focusing arrangement, the focusing arrangement being configured to focus the emitted continuous-wave laser beam onto a same probe volume comprising tracer particles, and an optical input port configured to receive back-scattered light from the tracer particles.

The optical output port and the optical input port may form a common optical input/output port for transmitting the received continuous-wave laser beam and for receiving the backscattered radiation.

The plurality of optical devices are being provided to have mutual pointing angles so that each of the plurality of optical devices points at the probe volume under a different angle. The system further comprises a processor configured to receive at least a part of the transmitted laser beam and the received backscattered radiation beam to calculate a Doppler shift, and thereby time sequentially determine a plurality of velocity components of the tracer particles using coherent detection.

According to another aspect of the present invention, a system for measuring a velocity of tracer particle motion in a fluid for providing an estimate of fluid velocity is provided, the system comprises a plurality of optical devices, each optical device comprising a laser emitter configured to emit a continuous-wave laser beam and a focusing arrangement. An optical output port may be configured to emit the continuous-wave laser beam towards the focusing arrangement, the focusing arrangement being configured to focus the emitted continuous-wave laser beam onto a same probe volume comprising tracer particles, and an optical input port may be configured to receive back-scattered light from the tracer particles. The optical output port and the optical input port may form a common optical input/output port for transmitting the received continuous-wave laser beam and for receiving the backscattered radiation. The plurality of optical devices are provided or configured to have mutual pointing angles so that each of the plurality of optical devices points at the probe volume under a different angle. A controller is configured to control the laser emitters as provided in each of the plurality of optical devices to sequentially emit a continuous-wave laser beam and a processor is configured to receive at least a part of the transmitted laser beam and the received backscattered radiation to calculate a Doppler shift, and thereby time sequentially determine a plurality of velocity components of the tracer particles using coherent detection.

According to a further aspect of the present invention, a method of measuring velocity of tracer particle motion in a fluid for providing an estimate of fluid velocity is provided. The method comprises emitting a continuous-wave laser beam, focusing the cw laser beam onto a probe volume comprising tracer particles using alternately one of a plurality of focusing arrangements, and receiving backscattered radiation from tracer particles in the probe volume in a receiver, and processing at least a part of the emitted laser beam and the received backscattered radiation to calculate a difference signal, and thereby time sequentially determine a plurality of velocity components of the tracer particles using coherent detection. The plurality of optical focusing arrangements may be provided to focus the cw laser beam along different axes, and a plurality of optical devices may each comprise one of the plurality of optical focusing arrangements. The optical devices may have common input/output ports for transmitting the received continuous wave laser beam towards a focusing arrangement and receiving the backscattered radiation.

It is an advantage of the present invention that a measurement system capable of a more precise and undisturbed wind measurement is provided.

The present invention may allow for improved precision, range and detectability and may furthermore be used both as a calibration device for wind speed anemometry in wind tunnels and for absolute flow distortion-free calibration of cup anemometers and sonic anemometers mounted in open space, such as mounted on booms and masts in open space.

It is an advantage of using a switching device to switch the laser beam in a time sequential manner to a plurality of optical devices in that there is only one laser beam in the system and no splitting of one laser beam into a number of laser beams is needed. Thereby, the power in the laser beam may be substantially maintained from the laser to the probe volume, with only system inherent losses, to thereby avoid a further amplification of the laser beam in the optical device immediately before focusing the beam onto the probe volume.

It is an advantage of using a continuous wave signal or beam in that an optimized spatial resolution may be obtained. For a pulsed laser the sampling time, which may be about 200 ns for a fibre laser, provides a lower limit for the spatial resolution. For a pulsed laser, a lower limit of the sampling time for the backscattered light corresponds to the pulse length and thereby for example for a 200 ns pulsed laser, the spatial resolution of the lidar may be 30 meters

It is an advantage of using a continuous wave system for measurements of wind from small probing volumes that the sampling time may be significantly increased and the sampling time may be above 50 $\mu$s, such as above 10 $\mu$s, such as above 5 $\mu$s, such as between 5 $\mu$s and 50 $\mu$s. Hereby, a spatial resolution of less than 1 m, such as of less than 50 cm, such as of less than 10 cm, such as less than 3 cm, etc.

In that each of the plurality of optical devices may have a transmitter for transmitting the received continuous wave laser beam through a common optical input/output port and a receiver for receiving the backscattered radiation through the common optical input/output port, and using coherent detection, a velocity component in the line-of-sight of the optical device is obtained. By providing a first and a second optical device, at least first and second velocity components of the tracer particles, i.e. a two dimensional velocity vector, may be determined. In embodiments wherein the plurality of optical devices includes at least a first, a second and a third optical device, at least a first, a second and a third velocity component may be obtained and thus a three dimensional velocity vector may be determined.

The laser beam is focused at the probe volume comprising tracer particles. The tracer particles may be inherently present in the fluid, such as air, to be analysed, or tracer particles may be introduced into the fluid in the form of seed particles so as to ensure a certain distribution of particles. It is however an advantage of the present invention that the measurement is insensitive to the distribution of the tracer particles in the probe volume. In that the present invention uses the coherent detection principle and do not rely on the formation of an interference pattern at the detector, the density of tracer particles may be lower than when using the LDA methodology as described above. The optical device comprises a focusing arrangement and the cw laser beam is focused at the same probe volume comprising tracer particles.

The focusing arrangement may be configured to focus the cw laser beam more than one meter away from the optical device, i.e. from the common optical input/output port of the optical device, such as more than 1.5 meters and less than 10 meters, such as between 2 m and 10 m, such as between 1.5 m and 5 m, such as between 2 m and 5 m, etc. The laser emitter may be any laser emitter, such as a laser emitter emitting light in any wavelength range. Preferably, the laser emitter is a Class 1 laser to ensure that the emitted laser beam is eye safe at the required power levels. The laser emitter may be an infra-red laser emitter such as a distributed feedback diode laser.

The laser beam may have a power of 0.1-5W, such as below 1 W or between 0.5 Wand 3 W.

The received back-scattered light is detected, typically by the use of a photo detector such as a photo diode. Following the coherent detection principle, typically a non-linear mixing of the received back-scattered light and the part of the transmitted laser beam guided towards the processor is performed and the mixed signal is shifted down to a radiofrequency domain, typically to the MHz range. A number of digitalized radio frequency signals are measured and using FFT calculations, the Doppler spectra encompassed in the down mixed signal is determined. The Doppler shift, i.e. the differences in Doppler peak signal values between the received back-scattered light and the part of the transmitted laser beam guided towards the processor, provides a measure for the wind velocity. The wind velocity may be determined such that wind velocity U is determined as

$$U = -(\lambda \, \Delta f)/2,$$

where $\lambda = c/f_0$ is the wavelength of the emitted laser beam, where c is the speed of light and $f_0$ the frequency of the emitted laser beam, and $\Delta f$ is the Doppler shift. Thus, for a continuous wave laser having a wavelength of $\lambda$ being 1.55 $\mu$m, a wind speed of approximately 0.8 m/s per MHz Doppler shift is obtained.

The optical devices may be telescopes, and the optical devices may comprise the optical focusing arrangement and a fibre optic coupler. The fibre optic coupler may be a fibre optic coupler having three ports, and the fibre optic coupler may comprise an optical circulator.

The fibre optic coupler may form the optical input port and output port. Thus, in one or more embodiments, the cw laser beam is transmitted in a fibre from the cw laser, e.g. via the switching device, to the optical device and coupled to the fibre optic coupler via a first port. A laser beam, comprising most of the laser beam received from the laser, is emitted through a second port towards the focusing arrangement. A small part of the laser beam received from the laser is transferred back to the detector via a third port, and backscattered radiation from the probe volume enters the fibre optic coupler via the second port and is coupled to the detector via the third port.

The plurality of optical devices may be provided to have mutual pointing angles so that each of the plurality of optical devices points at the same probe volume under a different angle. In one or more embodiments of the present invention, the plurality of optical devices may be provided in a frame configured to set mutual distances between the plurality of optical devices and/or to set mutual pointing angles for the plurality of optical devices.

The frame may be a sturdy and non-deformable structure, such as a structure configured to be positioned in or on the ground next to a mast, where wind measurements take place, such as for example next to a wind turbine tower or a meteorological mast, or used in a diagnostic wind tunnel, etc., and be designed to withstand high winds and vibrations without deforming, so that the positioning of the optical devices, their mutual angles and/or their mutual set distances will not change, or will substantially not change, by the effects of atmospheric influences.

The fluid velocity components measured by each of the plurality of the optical devices is the fluid velocity component in the line-of-sight for the respective optical device. Thus, a resulting fluid velocity is determined as the combination of the plurality of fluid velocity components from each of the respective optical devices. In one or more embodiments of the present invention, the mutual pointing angles are larger than 5°, such as between 5° and 90°, such as larger than 10°, such as between 25° and 65°, such as preferably between 25° and 45°, between 30° and 60°, such as preferably substantially 30°, such as 30°. It is envisaged that for a structure wherein the mutual pointing angles are between 50° and 60°, the angular deviations may be at a minimum, however, due to size restrictions of the structure, the mutual pointing angles may be chosen outside of this range.

The mutual pointing angle is the angle between the line-of-sight and a centre line for the optical measurement system. It is thus an advantage of the present invention that by positioning the optical devices having mutual pointing angles above 5°, a measure of different velocity components are obtained, providing a resulting 2, 3 or many-dimensional fluid velocity.

It is envisaged that the optical devices as positioned in a structure, the measurement construction, defines a plane, and the focus volume may be projected onto this plane. The line between the projected focus volume and the real focus volume provides a centre line for the structure and the pointing angle for each of the optical devices is provided as the angle between the line-of-sight for the optical device and the centre line.

In one or more embodiments, the fluid velocity is measured at the focus volume for the plurality of optical devices. The beams from each of the plurality of optical devices may be focused at a same probe volume, such as at a same probe volume being smaller than approx. $1\,m^3$, such as a spherical probe volume having a diameter of less than 1 m, such as less than 0.5 m, such as less than 0.4 m, etc. Typically, the focus volume for a coherent beam will be a focal volume, such as a focal volume having a radial extent along the transmitted beam being less than 1 m, such as less than 0.5 m, such as less than 0.25 m, and a transverse extent being less than 1 m, such as less than 0.5 m, such as less than 0.25 m, such as less than 0.1 m, such as less than 0.05 m. In one or more embodiments, the focal volume has a radial extent of less than 25 cm and a transverse extent of less than 1 cm. The focus volumes, such as the focal volumes, for each of the plurality of transmitted laser beams are provided within the same probe volume.

Typically, the longer the distance is between the measurement structure and the focus volume, the larger will the focus volume be.

It is an advantage of the present invention, that the measurement is performed on a volume so that differences, especially minor differences, in velocity within the volume may be smoothened out. It is a particular advantage of the present invention that is does not rely on e.g. scanning lidar measurements, wherein measurements are performed only along a circumference of a spherical volume.

Typically, when measuring in-field velocity, it is advantageous to measure the velocity at a point remote from the measurement set-up to avoid distortion effects from the measurement set-up, or measurement system, to influence the fluid flow and, hence, the fluid velocity. Preferably, the measurement is performed more than 2 meters from the measurement system, such as between 2 and 20 meters, such as between 2 m and 10 m, such as between 3 m and 5 m, between 5 m and 10 m, from the measurement system, such as between 2 and 20 meters in front of the plurality of optical devices. Thus, the focus length and the pointing angle of each of the plurality of optical devices, as well as the distances between the plurality of optical devices may be tailored to obtain a fluid velocity measurement at a predetermined distance from the measurement device.

In one or more embodiments of the present invention, the system comprises a laser emitter and further comprises a switching device configured to switch the emitted continuous wave laser beam between each of the plurality of optical devices. Thus, one laser beam may be switched between at least some of the plurality of optical devices. The laser emitter may be configured to emit a cw laser beam, and the laser beam may in some embodiments be provided to a switching device, such as a 1 x n switching device, for successively switching the laser beam between n optical devices, such as between n optical fibres for successively transmitting the switched laser beam to each of n optical devices connected to the n optical fibres. In that the laser beam is sequentially provided to each of the n optical devices, the laser beam is also emitted from each of the optical devices successively and therefore a measurement is performed successively by each of the n optical devices. It is an advantage that the switching time may be short, so that the velocity of particles in the focus volume is substantially continuously monitored.

The switching device may further comprise a controller for controlling the switching device according to a predetermined switching pattern.

The switching device may be implemented in any conventional way and the cw laser beam may be sustained at each of the plurality of optical devices for between 0.1 ms and as long as one hour, such as longer than 0.1 ms, such as longer than 0.5 ms, such as between 0.5 ms and 10 minutes, such as up to 5 minutes, such as up to 1 minutes, such as between 0.1 ms and 5 seconds, such as between 0.1 ms and 20 ms. The duration of the laser beam dwelling at an optical device may be called the sustainment time and a full measurement with all n optical devices may take n times the sustainment time.

The switching device may comprise an emitter switch, such as a 1 x n switching device for switching the emitted laser beam between n optical devices, thus, the switching device may comprise a 1 x 2 switching device for switching the emitted laser beam between two optical devices, the switching device may comprise a 1 x 3 switching divide for switching the emitted laser beam between three optical devices, etc.

The switching device may comprise a detector switch, such as an n x 1 switching device, for switching received detector signals from each of the n optical devices into a common detector, so that backscattered light received by each of the plurality of optical devices is switched to a common detector, from where the detected signal is processed in a processor.

The switching may be implemented using any fibre optic switching device known in the art, such as for example an electro-optical switching device, such as a solid state fibre optic switch, such as a switch using inorganic optical crystals. The switch, such as a solid state fibre optic switch, may connect optical channels by redirecting an incoming signal into a selected output optical fibre. The switching may be performed non-mechanical, and furthermore, the response time may be low, such as below 500 ns, such as below 300 ns, and may be configured for continuous switching. In one or more embodiments, the signal may be led to and from the optical device via an optical fibre. The switch may be polarization independent or the switch may be a polarization maintaining switch.

Alternatively, or additionally, in one or more embodiments there may be provided a laser emitter for each of at least some of the plurality of optical devices, such as a laser emitter for each of the plurality of optical devices, for example so that each optical device has an associated laser emitter.

Furthermore, each optical device may have an associated detector so that backscattered light received by a specific optical device is directed to a corresponding specific optical device before directing the signal to a common processor. The plurality of laser emitters may be controlled to alternately emit a continuous wave laser beam towards each of the optical devices so that each optical device alternately emit a cw laser beam towards the same probe volume at separate times. The laser emitters may be controlled so that the laser emitters subsequently emit a laser beam, so that each optical device subsequently transmits the laser beam towards the probe volume. Each laser emitter may be controlled to emit a laser beam for a predetermined period of time, such as between 0.1 ms and as long as one hour, such as longer than 0.1 ms, such as longer than 0.5 ms, such as between 0.5 ms and 10 minutes, such as up to 5 minutes, such as up to 1 minutes, such as between 0.1 ms and 5 seconds, such as between 0.5 ms and 20 ms. Thus, the laser emitters may alternately emit a laser beam for the predetermined period of time. Solid state lasers may be particularly useful for this application as they are in-expensive and reliable.

The backscattered light may be detected using any photo detector, such as a photo diode. It is an advantage of the present invention that the detector may be a standard photo diode, and that there is no need to use a more complex optical device, such as an interferometer, such as a Fabry Perot etalon.

In one or more embodiments, the measurement system is implemented using fibre optic technology so that the transmitter, the receiver and the common input/output port may be implemented in optical fibre technology, for example so that the common input/output port is a fibre optic coupler. Hereby, the entire system may be connected using fibre optic technology. It is an advantage of having a fibre based system in that conductors for e.g. electrically conducting signals between e.g. an optical device and the laser and/or the detector may be undesirable, for example when installing the system in a wind turbine where strike of lightning is a concern.

Thus, an optical fibre may connect the laser emitter or the laser emitters to the optical device(s), the incoming cw laser beam may be emitted through the fibre optic coupler and in one or more embodiments at least a part of the incoming cw laser beam may be reflected at the fibre optic couple towards the photo detector.

The optical signals may be handled using an optical circulator so that an incoming laser beam is transmitted, whereas received backscattered light as well as the part of the laser beam reflected at the fibre optic coupler is directed to the photo detector.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

BRIEF DESCRIPTION OF THE DRAWINGS

Fig. 1 shows schematically a number of optical devices positioned in a frame,

Fig. 2 shows another schematically view a number of optical devices in a frame,

Fig. 3 shows a system comprising an optical device shown in more detail,

Fig. 4 shows a system with a 1 x 2 and 2 x 1 switch in more detail,

Fig. 5 shows a system with two 1 x 3 switches.

Fig. 6 shows a system according to the present invention,

Fig. 7 shows a system according to another embodiment of the present invention,

Fig. 8 shows a system for measuring wind velocities in front of a mast,

Fig. 9 shows a system for measuring wind velocities in front of another mast,

Fig. 10 shows a schematic drawing of a frame with optical devices, and

Fig. 11 shows an exemplary sturdy frame with optical devices.

DETAILED DESCRIPTION OF THE DRAWINGS

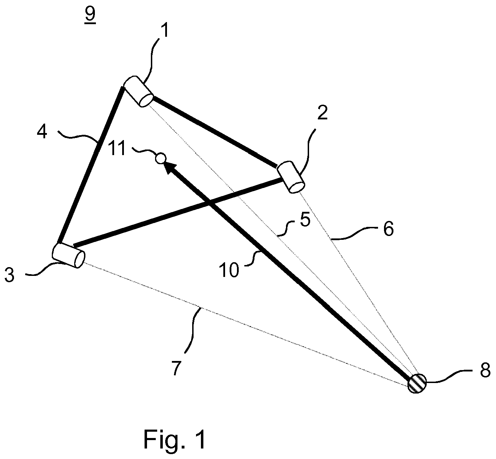

In Fig. 1, a frame 4 on which a plurality of optical devices 1, 2, 3 is mounted is shown in perspective. It is seen that the optical devices are configured so that the line-of-sight 5, 6, 7 for each of the optical devices 1, 2, 3, are directed towards the probe volume, or measuring volume, 8. The optical devices 1, 2, 3 are thus configured so that a laser beam emitted from each of the optical devices 1, 2, 3 will follow the line-of-sight 5, 6, 7 of the particular optical device towards the probe volume 8. The optical devices 1, 2, 3 are in the shown embodiment provided in a triangular shaped frame 4. The optical devices 1, 2, 3 may, as shown, be provided in a common plane having a common distance d to the probe volume.

Thus, the frame 4 provides a plane for the measurement construction as shown schematically in Fig. 1, and if the probe volume 8 is projected onto this plane, a centre line defined along projection vector 10, i.e. the centre line connects the probe volume 8 with the projected probe volume 11.

It is, thus, envisaged that for the optical devices as positioned in a frame, or structure, 4, the measurement construction 9 defines a plane, and the probe volume 8 may be projected onto this plane. The line between the projected probe volume 11 and the probe volume 8 provides a centre line along the projection vector 10 for the measurement construction and the pointing angle for each of the optical devices is provided as the angle between the line-of-sight 5, 6, 7 for the optical device 1, 2, 3 and the centre line parallel to projection vector 10.

The optical devices, or telescopes, 1, 2, 3 are configured to focus an emitted laser beam within the probe volume 8.

The mutual angle between two optical devices is the angle between the line-of-sight for two optical devices.

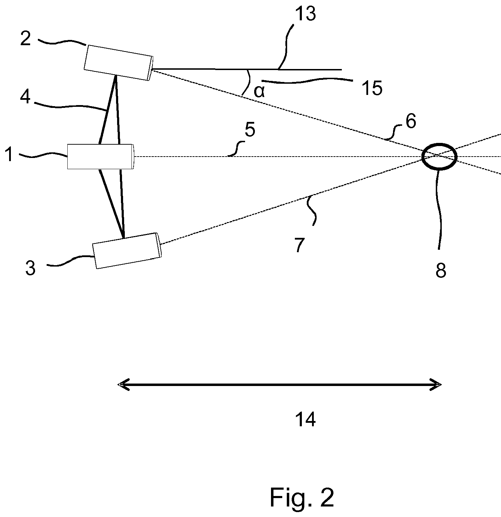

In Fig. 2 another schematically view of the optical devices 1, 2, 3 as provided in a frame 4 is shown. The distance 14 between the probe volume 8 and the plane of the optical devices 1, 2, 3 is shown. The pointing angle 15 for optical device 2 between the line-of-sight 6 and the centre line 13 is indicated.

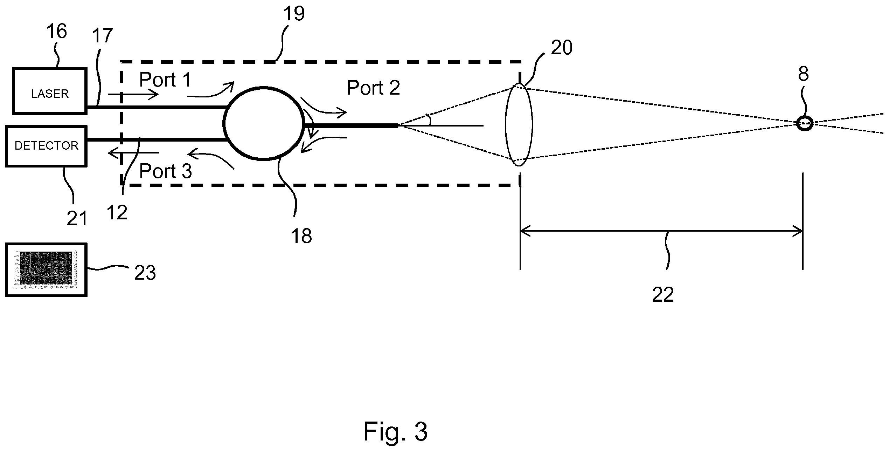

Fig. 3 shows a system for measuring a velocity of tracer particle motion. It is seen that an optical device 19, such as a telescope, is configured to receive a laser beam from a laser emitter 16 guided to the telescope 19 by optical fibre 17. The telescope 19 comprises a fibre coupler 18, such as an optical circulator 18 forming a common optical input/output port for a transmitted laser beam and received back-scattered radiation. The optical circulator 18 forms the optical output port, port 2, for a laser beam emitted from the laser emitter 16 and couples the laser beam guided by the optical fibre 17 out of the fibre 17 and towards the focusing arrangement 20 configured to focus the laser beam within the probe volume 8. The focusing arrangement is in Fig. 3 illustrated by a lens, is however envisaged that the focusing arrangement may comprise a number of optical elements, such as a number of lenses. The optical circulator 18 is furthermore configured to receive light backscattered from the probe volume 8 so that the optical circulator 18 is the optical input port, port 2, for the received backscattered light beam. The optical circulator 18 furthermore couples a part of the emitted laser beam back into the fibre 17, the back coupled optical beam being provided to be mixed with the received backscattered signal at the detector 21. The passage of laser light is illustrated by the arrows. The received backscattered radiation and the back-coupled part of the emitted laser beam is coupled into optical fibre 12 for transmission to the detector. The focusing arrangement 20 is configured to focus the emitted laser beam within probe volume 8 at a distance 22, such as at a distance of 3-5 m, from the focusing arrangement 20. The Doppler shift is calculated in processor 23 and the measured and calculated results are stored so that any resulting velocity components are calculated based on input from the multiplicity of optical devices.

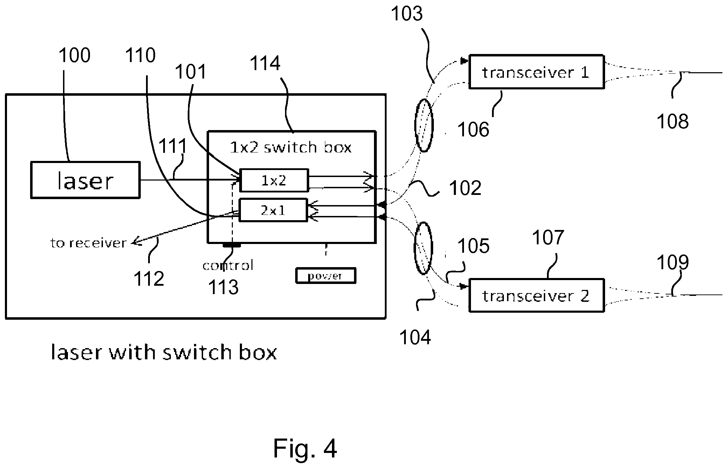

In Fig. 4, the laser emitter 100 is configured to emit a cw laser beam 111, and the laser beam 111 is provided to a 1 x 2 switching device 101 for successively switching the laser beam between n optical devices 106, 107, such as between n optical fibres 103, 105 for successively transmitting the switched laser beam to each of n optical devices 106, 107 connected to the n optical fibres 103, 105. In that the laser beam 111 is sequentially provided to each of the n optical devices 106, 107, a focused laser beam 108 is also emitted from each of the optical devices 106, 107 successively. The backscattered light is transmitted back to receiver switch 110, and the output signals 114 are provided to a detector. The switch box 114 may comprises the transmitter switch and/or the receiver switch. Receiver switch comprises a n x 1 receiver switch to switch the received signal and direct it towards the detector. A control element 113 controls the switching device 101 to sequentially provide the laser beam 111 to each of the optical devices 106, 107, for example according to a predetermined switching pattern.

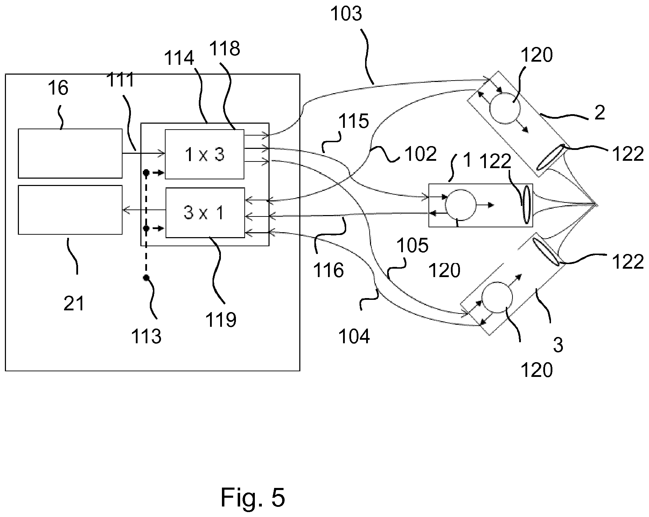

Fig. 5 shows a wind velocity measurement device according to the present invention. In this particular embodiment three telescopes 1, 2, 3 are provided and the switching box 114 thus comprises a 1 x 3 switch and a 3 x 1 switch. The optical devices 1, 2, 3, such as telescopes, each comprising an optical circulator 120 and focusing optics 122. It is envisaged that there is no amplifier in the optical device, as further amplification of the laser beam is superfluous.

The laser beam 111 is provided to a 1 x 3 switching device 118 for successively switching the laser beam 111 between n optical devices 1, 2, 3 such as between n optical fibres 103, 105, 115 for successively transmitting the switched laser beam to each of n optical devices 1, 2, 3 connected to the n optical fibres 103, 105. 115. The backscattered light is provided to 3 x 1 switch 119 through optical fibres 102, 104, 116 for transmission to common detector 21 from where the detected signal is processed in a processor. The control element 113 controls a coordinated switching in order to sequentially provide the laser beam to each of the optical devices 1, 2, 3 in sync with the switching from the pertinent all-fibre telescope return fibre 102, 104, 116 to the common detector 21.

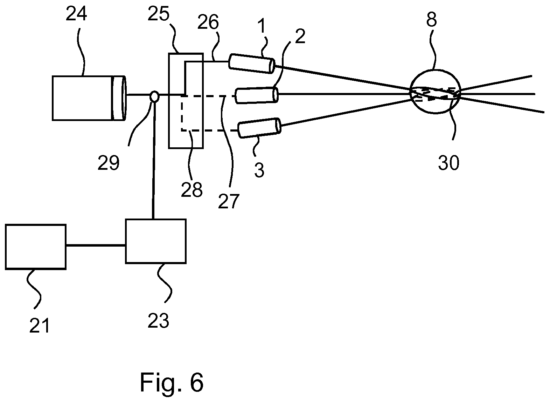

In Fig. 6, a system according to an embodiment of the present invention is shown schematically. In Fig. 6, one laser emitter 24 is configured to alternately deliver a laser beam to each of the plurality of optical devices 1, 2, 3. A switching device 25 is provided between the laser emitter 24 and each of the plurality of optical devices, the switching device 25 being configured to switch the laser beam between the optical devices 1, 2, 3. In the present embodiment, the switching device 25 is a fibre optic switch. The fibres 26, 27, 28 guide the emitted laser beam alternately to each of the optical devices 1, 2, 3 which are shown in more detail in Fig. 3. The switching device 25 also receives backscattered radiation and the back coupled optical beam, and via e.g. an optical circulator 29 positioned outside of the optical devices 1, 2, 3, the signals are distributed to the detector 21. In the probe volume 8, the focus area 30 for a laser beam emitted from the first optical device 1 is shown. It is seen that the focus area within the probe volume has a "cigar formed" shape, resulting from the diffuse scattering of the laser light beam, having a substantially Lorentzian shaped intensity distribution. The focus areas from laser beams emitted from optical devices 2, 3 are shown with broken lines, as they will not be present concurrently.

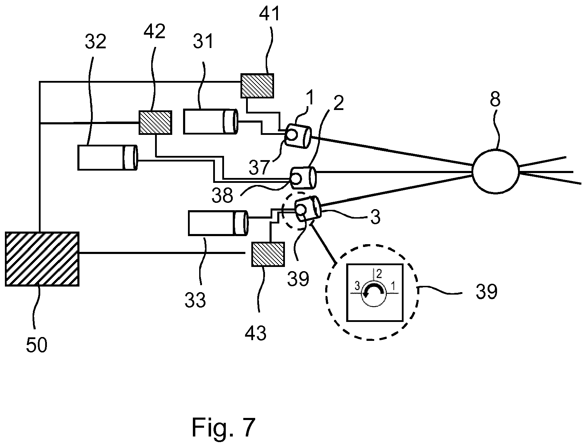

Fig. 7 shows a system according to another embodiment of the present invention. In this embodiment, each optical device 1, 2, 3 has an associated laser emitter 31, 32, 33 and detector 41, 42, 43. Each laser emitter 31, 32, 33 is controlled to emit a laser beam for predetermined and subsequent periods of time. The laser beams emitted from laser emitters 31, 31, 32 are guided to the optical devices 1, 2, 3 via optical fibres 34, 35, 36. As in the description of Fig. 6, the emitted laser beam, the backscattered light beam and the back coupled optical beam are distributed to the optical beam and the detectors 41, 42, 43, respectively, using optical circulators 37, 38, 39. The signals from each of the detectors are provided to the processor 50 for determination of the Doppler shift, the calculation of the respective wind velocity components and possibly a resulting wind vector.

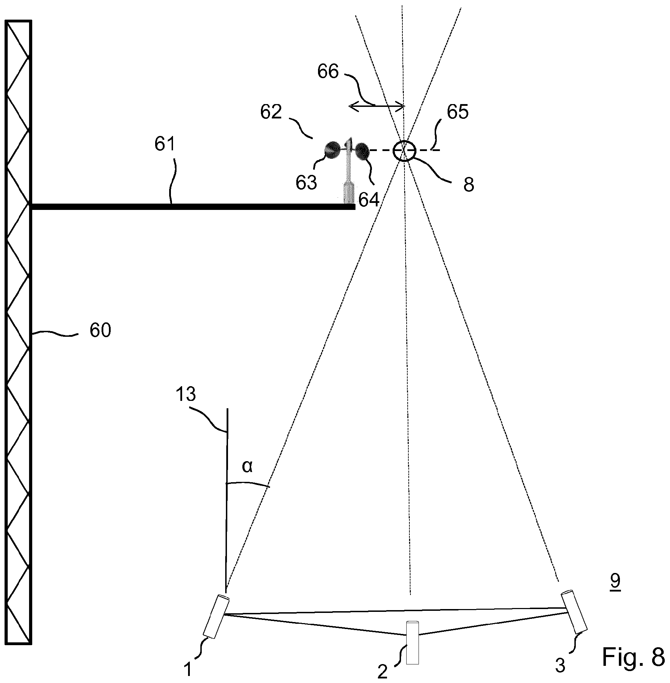

In Fig. 8, a system 9 for measurement of fluid particle velocity is shown. In the present example, it is seen that the system is positioned so that the plane comprising the three optical devices, 1, 2, 3, forms a plane substantially parallel to a ground plane. It is furthermore seen that the centre line 13, translated to indicate the pointing angle for the telescope 1, is orthogonal to the ground plane and parallel to mast 60. It is however envisaged that also other geometries positioned at other angles with respect to both ground plane and mast may be equally applied. The probe volume 8 is directly above the system 9. Mast 60 comprises a measurement arm 61, on which a mechanical cup anemometer 62 is positioned. To calibrate the mechanical cup anemometer 62, the system 9 is adjusted so that the probe volume is at the same height above the ground as the mechanical cups 63, 64. It is thus seen that the mechanical cups 63, 64 and the probe volume 8 are positioned along an axis 65 orthogonal to mast 60. In this embodiment, the system 9 provides a precise indication of the wind speed in front of the mechanical cup anemometer 62. The tracer particles present in the probe volume is in the present case dust particles, pollen particles, and other particles inherently present in the air.

To also calibrate for the influence which the measurement arm 61 and the mechanical cup anemometer 62 has on the measurement, the system 9 may be moved further away from the mast, so that the distance 66 between the measurement arm and the probe volume is increased. The measurements may be repeated any number of times and at different distances 66 so that the influence of the mast 60 and mechanical measurement set-up 61, 62 may be calculated. It is an advantage of using an optical system to calibrate the mechanical measurement set-up in that the optical measurement system 9 is remote from the probe volume 8. The probe volume may be 1-5 meters away from the optical measurement system 9, or even up to 10 or 100 meters for high masts, such as high wind turbine mast or the like. It is envisaged that for measurements farther away from the measurement system, a measurement system comprising only two optical devices may be preferred.

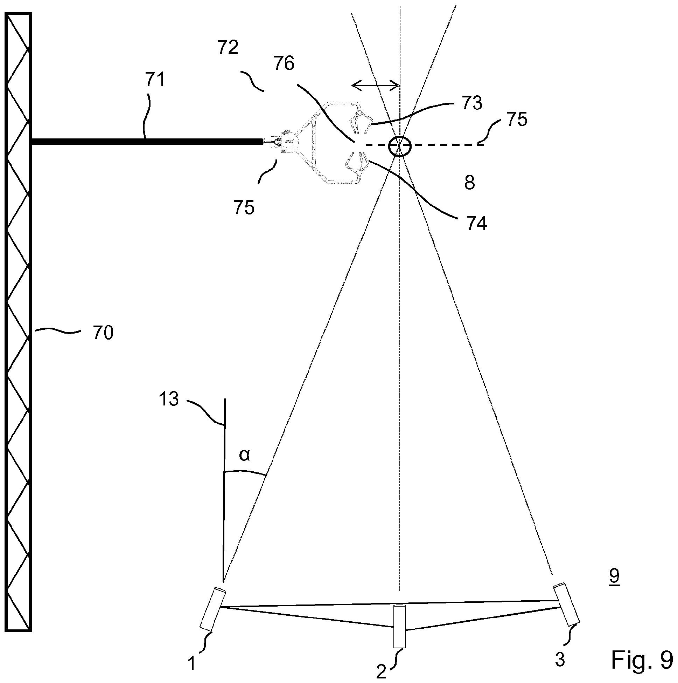

In the example of Fig. 9, the measurement system 9 is provided on the ground next to a mast 70 having a sonic measurement system 72 positioned on a measurement arm 71. As in Fig. 8, it is seen that the system is positioned so that the plane comprising the three optical devices, 1, 2, 3, forms a plane substantially parallel to a ground plane. It is furthermore seen that the centre line 13, translated to indicate the pointing angle for the telescope 1, is orthogonal to the ground plane and parallel to mast 70. The probe volume 8 is directly above the system 9. It is however envisaged that also other geometries positioned at other angles with respect to both ground plane and mast may be equally applied.

To calibrate the sonic anemometer, which in the present case is a 3D wind sonic anemometer 72 comprising measurement transducers 73, 74 and electronics 75, the system 9 is adjusted so that the probe volume is at the same height above the ground as the centre 76 between the measurement transducers 73, 74. It is thus seen that the sonic anemometer measurement volume 76 and the probe volume 8 are positioned along an axis 75 orthogonal to mast 70. In this embodiment, the system 9 provides a precise indication of the wind speed in front of the sonic anemometer 72. The tracer particles present in the probe volume is in the present case dust particles, pollen particles, and other particles inherently present in the air. As described above with respect to Fig. 8, it is envisaged that the optical measurement system 9 may be provided at different distances to the mast 70, so as to iteratively remove the system 9 from the mast 70, to thereby take the influence of the sonic/mechanical measurement set-up into account. It is an advantage of the optical measurement system 9, that the wind measurement is flow distortion free.

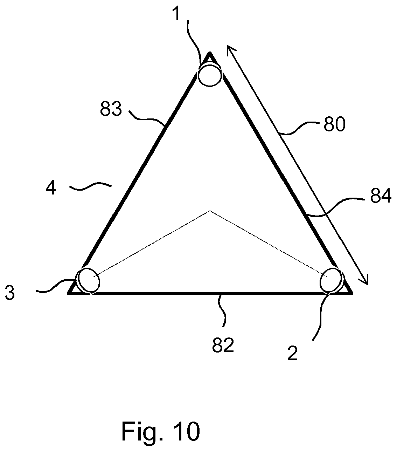

Fig. 10 shows a schematic diagram of the optical devices 1, 2, 3 as provided in a frame 4. The distance 80 between two optical devices may be adjustable. It is envisaged, that for the system 9 to be adjustable to different measurement set-ups, the optical devices 9 may be adjustable positioned along the frame axes 81, 82, 83, and furthermore, the optical devices may be rotatably positioned on the frame so that the pointing angle for each of the optical devices 1, 2, 3 may be adjusted according to the intended use. During the measurements, however, it is preferred to have the optical devices held tightly in place to avoid any disturbances from e.g. vibration of the optical devices in the wind to have any influence on the measurement results.

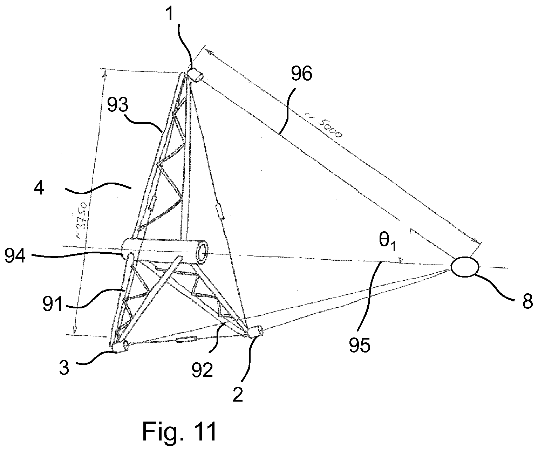

In Fig. 11, an exemplary frame 90 for supporting the telescopes is shown. The frame is made of steel, and arms 91, 92, 93 are mounted about a centre mounting piece 94. When a centre piece 94 is provided, a centre axis 95 may be defined as an axis from the centre piece 94 and towards the probe volume 8. The mutual pointing angles may thus be defined as the pointing angle for each telescope 1, 2, 3 with respect to the centre axis 95, such as e.g. the angle $\theta_1$ between the pointing axis 96 of the telescope 1, etc. The frame 90 may be provided 5 meters from the probe volume, the angles $\theta_1$, etc. may be 30 degrees, and the distance between two telescopes may be 3.75 meters.

## Claims

1. A system (9) for measuring a velocity of tracer particle motion in a fluid for providing an estimate of fluid velocity, the system (9) comprising:

   - at least one laser emitter (16, 24, 31, 32, 33, 100) configured to emit a continuous-wave laser beam (111),
   - a plurality of optical devices (1, 2, 3, 19, 106, 107),
   - a switching device (25, 101, 118) configured to receive the continuous-wave laser beam (111) and switch the continuous-wave laser beam (111) sequentially to each of the plurality of optical devices (1, 2, 3, 19, 106, 107), each of the plurality of optical devices (1, 2, 3, 19, 106, 107) being configured to focus the continuous-wave laser beam (111) received from the switching device (25, 101, 118) onto a focus volume, and comprising

      - a focusing arrangement (20),
      - an optical output port (port 2) configured to emit the continuous-wave laser beam (111) towards the focusing arrangement (20), the focusing arrangement (20) being configured to focus the emitted continuous-wave laser beam (111) onto a same probe volume (8) comprising tracer particles, and an optical input port (port 2) configured to receive back-scattered light from the tracer particles,

wherein the optical output port (port 2) and the optical input port (port 2) form a common optical input/output port (port 2) for transmitting the received continuous-wave laser beam (111) and for receiving the back-scattered radiation, the plurality of optical devices (1, 2, 3, 19, 106, 107) being provided to have mutual pointing angles (15) so that each of the plurality of optical devices (1, 2, 3, 19, 106, 107) points at the probe volume (8) under a different angle, and a processor (23, 50) configured to receive at least a part of the transmitted laser beam (111) and the received backscattered radiation beam to calculate a Doppler shift, and thereby time sequentially determine a plurality of velocity components of the tracer particles using coherent detection.

2. A system (9) according to claim 1, wherein the system (9) further comprises a controller configured to control the switching of the switching device (25, 101, 118).

3. A system (9) according to claim 2, wherein the controller is configured to control the switching device (25, 101, 118) so that the emitted continuous wave laser beam (111) is sustained at each of the plurality of optical devices (1, 2, 3, 19, 106, 107) for a predetermined period of time.

4. A system (9) according to any of the previous claims, wherein the system (9) comprises at least a first and a second optical device to determine at least first and second velocity components of the tracer particles motion.

5. A system (9) according to any of the previous claims, wherein the plurality of optical devices (1, 2, 3, 19, 106, 107) includes at least a first, a second and a third optical device to provide at least a first, a second and a third velocity component.

6. A system (9) according to any of the previous claims, wherein the processor (23, 50) is configured to determine the velocity components from Doppler shift determination based on continuous wave coherent detection.

7. A system (9) according to any of the previous claims, wherein the plurality of optical devices (1, 2, 3, 19, 106, 107) are provided in a frame (4, 90) configured to set mutual distances between the plurality of optical devices (1, 2, 3, 19, 106, 107) and to set pointing angles (15) for the plurality of optical devices (1, 2, 3, 19, 106, 107).

8. A system (9) according to any of the previous claims, wherein the detector (21, 41, 42, 43) is a photodiode detector.

9. A system (9) according to any of the previous claims, wherein the probe volume (8) has a diameter smaller than 1 m, such as smaller than 50 cm.

10. A system (9) according to any of the previous claims, wherein the common input/output port (port 2) is implemented in optical fibre technology, so that the common input/output port (port 2) is a fibre optic coupler (18), such as an optical circulator (18, 29, 37, 38, 39).

11. A system (9) for measuring a velocity of tracer particle motion in a fluid for providing an estimate of fluid velocity, the system (9) comprising:

a plurality of optical devices (1, 2, 3, 19, 106, 107), each optical device (1, 2, 3, 19, 106, 107) comprising

- a laser emitter (16, 24, 31, 32, 33, 100) configured to emit a continuous-wave laser beam (111),
- a focusing arrangement (20),
- an optical output port (port 2) configured to emit the continuous-wave laser beam (111) towards the focusing arrangement (20), the focusing arrangement (20) being configured to focus the emitted continuous-wave laser beam (111) onto a same probe volume (8) comprising tracer particles, and an optical input port (port 2) configured to receive back-scattered light from the tracer particles,

wherein the optical output port (port 2) and the optical input port (port 2) form a common optical input/output port (port 2) for transmitting the received continuous-wave laser beam (111) and for receiving the backscattered radiation, the plurality of optical devices (1, 2, 3, 19, 106, 107) being provided to have mutual pointing angles (15) so that each of the plurality of optical devices (1, 2, 3, 19, 106, 107) points at the probe volume (8) under a different angle, and a controller configured to control the laser emitters (16, 24, 31, 32, 33, 100) as provided in each of the plurality of optical devices (1, 2, 3, 19, 106, 107) to sequentially emit a continuous-wave laser beam (111), a processor (23, 50) configured to receive at least a part of the transmitted laser beam (111) and the received backscattered radiation beam to calculate a Doppler shift, and thereby time sequentially determine a plurality of velocity components of the tracer particles using coherent detection.

12. A method of measuring velocity of tracer particle motion in a fluid for providing an estimate of fluid velocity, the method comprising

emitting a continuous-wave laser beam (111),

switching the continuous-wave laser beam (111) sequentially to each of a plurality of optical devices (1, 2, 3, 19, 106, 107),

focusing the cw laser beam (111) onto a probe volume (8) comprising tracer particles using alternately one of a plurality of focusing arrangements (20), and receiving backscattered radiation from tracer particles in the probe volume (8) in a receiver,

wherein the plurality of optical devices (1, 2, 3, 19, 106, 107) is provided to have mutual pointing angles (15) so that each of the plurality of optical devices (1, 2, 3, 19, 106, 107) points at the probe volume (8) under a different angle,

processing at least a part of the emitted laser beam (111) and the received backscattered radiation to calculate a Doppler shift, and thereby time sequentially determine a plurality of velocity components of the tracer particles using coherent detection.

13. A method according to claim 12, wherein the plurality of optical focusing arrangements (20) are being provided to focus the cw laser beam (111) along different axes, and wherein a plurality of optical devices (1, 2, 3, 19, 106, 107) each comprises one of the plurality of optical focusing arrangements (20), the optical devices (1, 2, 3, 19, 106, 107) having common input/output ports (port 2) for transmitting the received continuous wave laser beam (111) and receiving the scattered radiation.

14. A system (9) according to any of claims 1- 11, wherein the optical devices (1, 2, 3, 19, 106, 107) are adjustably provided in a frame (4, 90) to in-situ calibrate wind speed anemometry in wind tunnels and cup and sonic anemometers (62, 72) mounted in open space.

15. A method according to any of claims 12-13, wherein the optical devices (1, 2, 3, 19, 106, 107) are adjustably provided in a frame (4, 90) to in-situ calibrate wind speed anemometry in wind tunnels and cup and sonic anemometers (62, 72) mounted in open space.

**Patentansprüche**

1. System (9) zur Messung einer Geschwindigkeit einer Tracerpartikelbewegung in einem Fluid zur Bereitstellung einer Schätzung der Fluidgeschwindigkeit, welches System (9) Folgendes umfasst:

- mindestens einen Laseremitter (16, 24, 31, 32, 33, 100), der dafür ausgelegt ist, einen CW-Laserstrahl (111) auszusenden,
- eine Mehrheit von optischen Einrichtungen (1, 2, 3, 19, 106, 107),
- eine Schaltvorrichtung (25, 101, 118), die dafür ausgelegt ist, den CW-Laserstrahl (111) zu empfangen und den CW-Laserstrahl (111) zu jeder der Mehrheit von optischen Einrichtungen (1, 2, 3, 19, 106, 107) sequentiell umzuschalten,

wobei jede der Mehrheit von optischen Einrichtungen (1, 2, 3, 19, 106, 107) dafür ausgelegt ist, den von der Schaltvorrichtung (25, 101, 118) empfangenen CW-Laserstrahl (111) auf ein Fokusvolumen zu fokussieren, und umfassend

- eine Fokussieranordnung (20),
- einen optischen Ausgangsport (Port 2), der dafür ausgelegt ist, den CW-Laserstrahl (111) in Richtung der Fokussieranordnung (20) auszusenden, wobei die Fokussieranordnung (20) dafür ausgelegt ist, den ausgesendeten CW-Laserstrahl (111) auf ein gleiches Prüfvolumen (8) umfassend Tracerpartikel zu fokussieren,

und

einen optischen Eingangsport (Port 2), der dafür ausgelegt ist, rückgestreutes Licht von den Tracerpartikeln zu empfangen,

wobei der optische Ausgangsport (Port 2) und der optische Eingangsport (Port 2) einen gemeinsamen optischen Eingangs-/Ausgangsport (Port 2) zum Übertragen des empfangenen CW-Laserstrahls (111) und zum Empfangen der rückgestreuten Strahlung bilden, wobei die Mehrheit von optischen Einrichtungen (1, 2, 3, 19, 106, 107) bereitgestellt sind, um gegenseitige Spitzwinkel (15) aufzuweisen, so dass jede der Mehrheit von optischen Einrichtungen (1, 2, 3, 19, 106, 107) auf das Prüfvolumen (8) in einem anderen Winkel zeigt, und einen Prozessor (23, 50), der dafür ausgelegt ist, mindestens einen Teil des übertragenen Laserstrahls (111) und der empfangenen rückgestreuten Strahlung zu empfangen, um eine Dopplerverschiebung zu berechnen und dadurch eine Mehrheit von Geschwindigkeitskomponenten der Tracerpartikel unter Anwendung von kohärenter Detektion zeitsequentiell zu bestimmen.

2. System (9) nach Anspruch 1, wobei das System (9) weiter eine Steuereinheit umfasst, die dafür ausgelegt ist, das Umschalten der Schaltvorrichtung (25, 101, 118) zu steuern.

3. System (9) nach Anspruch 2, wobei die Steuereinheit dafür ausgelegt ist, die Schaltvorrichtung (25, 101, 118) so zu steuern, dass der ausgesendete CW-Laserstrahl (111) an jeder der Mehrheit von optischen Einrichtungen (1, 2, 3, 19, 106, 107) für einen vorgegebenen Zeitraum aufrechterhalten wird.

4. System (9) nach einem der vorgehenden Ansprüche, wobei das System (9) mindestens eine erste und eine zweite optische Einrichtung umfasst, um mindestens erste und zweite Geschwindigkeitskomponenten der Tracerpartikelbewegung zu bestimmen.

5. System (9) nach einem der vorgehenden Ansprüche, wobei die Mehrheit der optischen Einrichtungen (1, 2, 3, 19, 106, 107) mindestens eine erste, eine zweite und eine dritte optische Einrichtung aufweist, um mindestens eine erste, eine zweite und eine dritte Geschwindigkeitskomponente bereitzustellen.

6. System (9) nach einem der vorgehenden Ansprüche, wobei der Prozessor (23, 50) dafür ausgelegt ist, die Geschwindigkeitskomponenten von Dopplerverschiebungbestimmung auf Basis von kohärenter CW-Detektion zu bestimmen.

7. System (9) nach einem der vorgehenden Ansprüche, wobei die Mehrheit von optischen Einrichtungen (1, 2, 3, 19, 106, 107) in einem Rahmen (4, 90) angeordnet sind, der dafür ausgelegt ist, gegenseitige Abstände zwischen der Mehrheit von optischen Einrichtungen (1, 2, 3, 19, 106, 107) einzustellen und Spitzwinkel (15) für die Mehrheit von optischen Einrichtungen (1, 2, 3, 19, 106, 107) einzustellen.

8. System (9) nach einem der vorgehenden Ansprüche, wobei der Detektor (21, 41, 42, 43) ein Photodiodendetektor ist.

9. System (9) nach einem der vorgehenden Ansprüche, wobei das Prüfvolumen (8) einen Durchmesser von kleiner als 1 m, wie beispielsweise kleiner als 50 cm, hat.

10. System (9) nach einem der vorgehenden Ansprüche, wobei der gemeinsame Eingangs-/Ausgangsport (Port 2) in Glasfasertechnologie implementiert ist, so dass der gemeinsame Eingangs-/Ausgangsport (Port 2) ein Faseroptik-Koppler (18), wie beispielsweise ein optischer Zirkulator (18, 29, 37, 38, 39), ist.

11. System (9) zur Messung einer Geschwindigkeit einer Tracerpartikelbewegung in einem Fluid zur Bereitstellung einer Schätzung der Fluidgeschwindigkeit, welches System (9) Folgendes umfasst:

    eine Mehrheit von optischen Einrichtungen (1, 2, 3, 19, 106, 107), wobei jede optische Einrichtung (1, 2, 3, 19, 106, 107) Folgendes umfasst

    - einen Laseremitter (16, 24, 31, 32, 33, 100), der dafür ausgelegt ist, einen CW-Laserstrahl (111) auszusenden,
    - eine Fokussieranordnung (20),
    - einen optischen Ausgangsport (Port 2), der dafür ausgelegt ist, den CW-Laserstrahl (111) in Richtung der Fokussieranordnung (20) auszusenden, wobei die Fokussieranordnung (20) dafür ausgelegt ist, den ausgesendeten CW-Laserstrahl (111) auf ein gleiches Prüfvolumen (8) umfassend Tracerpartikel zu fokussieren,

    und

    einen optischen Eingangsport (Port 2), der dafür ausgelegt ist, rückgestreutes Licht von den Tracerpartikeln zu empfangen,

    wobei der optische Ausgangsport (Port 2) und der optische Eingangsport (Port 2) einen gemeinsamen optischen Eingangs-/Ausgangsport (Port 2) zum Übertragen des empfangenen CW-Laserstrahls (111) und zum Empfangen der rückgestreuten Strahlung bilden, wobei die Mehrheit von optischen Einrichtungen (1, 2, 3, 19, 106, 107) bereitgestellt sind, um gegenseitige Spitzwinkel (15) aufzuweisen, so dass jede der Mehrheit von optischen Einrichtungen (1, 2, 3, 19, 106, 107) auf das Prüfvolumen (8) in einem anderen Winkel zeigt, und eine Steuereinheit, die dafür ausgelegt ist, die Laseremitter (16, 24, 31, 32, 33, 100) wie in jeder der Mehrheit von optischen Einrichtungen (1, 2, 3, 19, 106, 107) bereitgestellt, dazu zu steuern, einen CW-Laserstrahl (111) sequentiell auszusenden, einen Prozessor (23, 50), der dafür ausgelegt ist, mindestens einen Teil des übertragenen Laserstrahls (111) und der empfangenen rückgestreuten Strahlung zu empfangen, um eine Dopplerverschiebung zu berechnen und dadurch eine Mehrheit von Geschwindigkeitskomponenten der Tracerpartikel unter Anwendung von kohärenter Detektion zeitsequentiell zu bestimmen.

12. Verfahren zur Messung der Geschwindigkeit einer Tracerpartikelbewegung in einem Fluid zur Bereitstellung einer Schätzung der Fluidgeschwindigkeit, welches Verfahren Folgendes umfasst Aussenden eines CW-Laserstrahls (111), sequentielles Umschalten des CW-Laserstrahls (111) zu jeder einer Mehrheit von optischen Einrichtungen (1, 2, 3, 19, 106, 107),

Fokussieren des CW-Laserstrahls (111) auf ein Prüfvolumen (8) umfassend Tracerpartikel unter Anwendung von wechselweise einer von einer Mehrheit von Fokussieranordnungen (20), und Empfangen von rückgestreuten Strahlung von Tracerpartikeln im Prüfvolumen (8) in einem Empfänger, wobei die Mehrheit von optischen Einrichtungen (1, 2, 3, 19, 106, 107) bereitgestellt sind, um gegenseitige Spitzwinkel (15) aufzuweisen, so dass jede der Mehrheit von optischen Einrichtungen (1, 2, 3, 19, 106, 107) auf das Prüfvolumen (8) in einem anderen Winkel zeigt, Bearbeiten mindestens eines Teils des ausgesendeten Laserstrahls (111) und der empfangenen rückgestreuten Strahlung, um eine Dopplerverschiebung zu berechnen und dadurch eine Mehrheit von Geschwindigkeitskomponenten der Tracerpartikel unter Anwendung von kohärenter Detektion zeitsequentiell zu bestimmen.

13. Verfahren nach Anspruch 12, wobei die Mehrheit von optischen Fokussieranordnungen (20) bereitgestellt werden, um den CW-Laserstrahl (111) entlang verschiedenen Achsen zu fokussieren, und wobei eine Mehrheit von optischen Einrichtungen (1, 2, 3, 19, 106, 107) jeweils eine der Mehrheit von optischen Fokussieranordnungen (20) umfasst, wobei die optischen Einrichtungen (1, 2, 3, 19, 106, 107) gemeinsame Eingangs-/Ausgangsports (Port 2) zum Übertragen des empfangenen CW-Laserstrahls (111) und zum Empfangen der rückgestreuten Strahlung aufweisen.

14. System (9) nach einem der Ansprüche 1-11, wobei die optischen Einrichtungen (1, 2, 3, 19, 106, 107) in einem Rahmen (4, 90) justierbar angeordnet sind, um Windgeschwindigkeitsmessung in Windkanälen und Schalenkreuz- und Schallanemometer (62, 72), die auf Freiflächen montiert sind, vor Ort zu kalibrieren.

15. Verfahren nach einem der Ansprüche 12-13, wobei die optischen Einrichtungen (1, 2, 3, 19, 106, 107) in einem Rahmen (4, 90) justierbar angeordnet werden, um Windgeschwindigkeitsmessung in Windkanälen und Schalenkreuz- und Schallanemometer (62, 72), die auf Freiflächen montiert sind, vor Ort zu kalibrieren.

**Revendications**

1. Système (9) pour mesurer une vitesse de déplacement de particules de traceur dans un fluide pour fournir une estimation de la vitesse de fluide, le système (9) comprenant:

- au moins un émetteur laser (16, 24, 31, 32, 33, 100) configuré pour émettre un faisceau laser à ondes continues (111),
- une pluralité de dispositifs optiques (1, 2, 3, 19, 106, 107),
- un dispositif de commutation (25, 101, 118) configuré pour recevoir le faisceau laser à ondes continues (111) et commuter le faisceau laser à ondes continues (111) séquentiellement à chacun de la pluralité de dispositifs optiques (1, 2, 3, 19, 106, 107),

chacun de la pluralité de dispositifs optiques (1, 2, 3, 19, 106, 107) étant configuré pour focaliser le faisceau laser à ondes continues (111) reçu à partir du dispositif de commutation (25, 101, 118) sur un volume de focalisation, et comprenant

- un dispositif de focalisation (20),
- un port de sortie optique (port 2) configuré pour émettre le faisceau laser à ondes continues (111) vers le dispositif de focalisation (20), le dispositif de focalisation (20) étant configuré pour focaliser le faisceau laser à ondes continues (111) émis sur un même volume de sonde (8) comprenant des particules de traceur,

et

un port d'entrée optique (port 2) configuré pour recevoir une lumière rétrodiffusée à partir des particules de traceur,

dans lequel le port de sortie optique (port 2) et le port d'entrée optique (port 2) forment un port commun d'entrée/sortie optique (port 2) pour transmettre le faisceau laser à ondes continues (111) reçu et pour recevoir le rayonnement rétrodiffusé, la pluralité de dispositifs optiques (1, 2, 3, 19, 106, 107) étant prévue pour avoir des angles de pointage mutuels (15) si bien que chacun de la pluralité de dispositifs optiques (1, 2, 3, 19, 106, 107) pointe le volume de sonde (8) sous un angle différent, et un processeur (23, 50) configuré pour recevoir au moins une partie du faisceau laser transmis (111) et le faisceau de rayonnement rétrodiffusé reçu pour calculer un décalage Doppler, et ainsi déterminer séquentiellement une pluralité de composants de vitesse des particules de traceur en utilisant une détection cohérente.

2. Système (9) selon la revendication 1, dans lequel le système (9) comprend en outre un dispositif de commande configuré pour commander la commutation du dispositif de commutation (25, 101, 118).

3. Système (9) selon la revendication 2, dans lequel le dispositif de commande est configuré pour commander le dispositif de commutation (25, 101, 118) si bien que le faisceau laser à ondes continues émis (111) est maintenu à chacun de la pluralité de dispositifs optiques (1, 2, 3, 19, 106, 107) pendant une période de temps prédéterminée.

4. Système (9) selon l'une quelconque des revendications précédentes, dans lequel le système (9) comprend au moins un premier et un deuxième dispositif optique pour déterminer au moins des premier et deuxième composants de vitesse du déplacement des particules de traceur.

5. Système (9) selon l'une quelconque des revendications précédentes, dans lequel la pluralité de dispositifs optiques (1, 2, 3, 19, 106, 107) comprend au moins un premier, un deuxième et un troisième dispositif optique pour fournir au moins un premier, un deuxième et un troisième composant de vitesse.

6. Système (9) selon l'une quelconque des revendications précédentes, dans lequel le processeur (23, 50) est configuré pour déterminer les composants de vitesse à partir d'une détermination d'un décalage Doppler basée sur une détection cohérente à ondes continues.

7. Système (9) selon l'une quelconque des revendications précédentes, dans lequel la pluralité de dispositifs optiques (1, 2, 3, 19, 106, 107) est prévue dans une trame (4, 90) configurée pour établir des distances mutuelles entre la pluralité de dispositifs (1, 2, 3, 19, 106, 107) et pour définir des angles de pointage (15) pour la pluralité de dispositifs optiques (1, 2, 3, 19, 106, 107).

8. Système (9) selon l'une quelconque des revendications précédentes, dans lequel le détecteur (21, 41, 42, 43) est un détecteur de photodiode.

9. Système (9) selon l'une quelconque des revendications précédentes, dans lequel le volume de sonde (8) présente un diamètre inférieur à 1 m, par exemple inférieur à 50 cm.

10. Système (9) selon l'une quelconque des revendications précédentes, dans lequel le port commun d'entrée/de sortie (port 2) est implémenté dans la technologie des fibres optiques, si bien que le port commun d'entrée/de sortie (port 2) est un coupleur à fibre optique (18), tel qu'un circulateur optique (18, 29, 37, 38, 39).

11. Système (9) pour mesurer une vitesse de déplacement de particules de traceur dans un fluide pour fournir une estimation de la vitesse du fluide, le système (9) comprenant:

une pluralité de dispositifs optiques (1, 2, 3, 19, 106, 107), chaque dispositif optique (1, 2, 3, 19, 106, 107) comprenant

- un émetteur laser (16, 24, 31, 32, 33, 100) configuré pour émettre un faisceau laser à ondes continues (111),
- un dispositif de focalisation (20),
- un port de sortie optique (port 2) configuré pour émettre le faisceau laser à ondes continues (111) vers le dispositif de focalisation (20), le dispositif de focalisation (20) étant configuré pour focaliser le faisceau laser à ondes continues (111) émis sur un même volume de sonde (8) comprenant des particules de traceur,

et

un port d'entrée optique (port 2) configuré pour recevoir une lumière rétrodiffusée à partir des particules de traceur,

dans lequel le port de sortie optique (port 2) et le port d'entrée optique (port 2) forment un port commun d'entrée/de sortie optique (port 2) pour transmettre le faisceau laser à ondes continues (111) reçu et pour recevoir le rayonnement rétrodiffusé,
la pluralité de dispositifs optiques (1, 2, 3, 19, 106, 107) étant prévue pour avoir des angles de pointage mutuels (15) si bien que chacun de la pluralité de dispositifs optiques (1, 2, 3, 19, 106, 107) pointe le volume de sonde (8) sous un angle différent, et
un dispositif de commande configuré pour commander les émetteurs laser (16, 24, 31, 32, 33, 100) tels que prévus dans chacun de la pluralité de dispositifs optiques (1, 2, 3, 19, 106, 107) pour émettre séquentiellement un faisceau laser à ondes continues (111),
un processeur (23, 50) configuré pour recevoir au moins une partie du faisceau laser transmis (111) et le faisceau de rayonnement rétrodiffusé reçu pour calculer un décalage Doppler, et ainsi déterminer séquentiellement une pluralité de composants de vitesse des particules de traceur en utilisant une détection cohérente.

12. Procédé pour mesurer une vitesse de déplacement de particules de traceur dans un fluide pour fournir une estimation de la vitesse du fluide, le procédé comprenant
l'émission d'un faisceau laser à ondes continues (111),
la commutation du faisceau laser à ondes continues (111) séquentiellement à chacun de la pluralité de dispositifs optiques (1, 2, 3, 19, 106, 107),

la focalisation du faisceau laser à ondes continues (111) sur un volume de sonde (8) comprenant des particules de traceur en utilisant alternativement l'un d'une pluralité de dispositifs de focalisation (20), et la réception de rayonnement rétrodiffusé provenant de particules de traceur dans le volume de sonde (8) dans un récepteur,

la pluralité de dispositifs optiques (1, 2, 3, 19, 106, 107) étant prévue pour avoir des angles de pointage mutuels (15) si bien que chacun de la pluralité de dispositifs optiques (1, 2, 3, 19, 106, 107) pointe le volume de la sonde (8) sous un angle différent,

le traitement d'au moins une partie du faisceau laser transmis (111) et le rayonnement rétrodiffusé reçu pour calculer un décalage Doppler, et ainsi déterminer séquentiellement en temps une pluralité de composantes de vitesse des particules de traceur en utilisant une détection cohérente.

13. Procédé selon la revendication 12, dans lequel la pluralité de dispositifs de focalisation optique (20) est prévue pour focaliser le faisceau laser à ondes continues (111) selon des axes différents, et dans lequel une pluralité de dispositifs optiques (1, 2, 3, 19, 106, 107) chacun comprend l'un des pluralités de dispositifs de focalisation optique (20), les dispositifs optiques (1, 2, 3, 19, 106, 107) ayant des ports communs d'entrée/de sortie (port 2) pour transmettre le faisceau laser à ondes continues reçu (111) et recevoir le rayonnement diffusé.

14. Système (9) selon l'une quelconque des revendications 1 à 11, dans lequel les dispositifs optiques (1, 2, 3, 19, 106, 107) sont pourvus de manière réglable dans une trame (4, 90) pour calibrer in-situ l'anémométrie de vitesse de vent dans les souffleries et des anémomètres à coupes et soniques (62, 72) montés dans un espace ouvert.

15. Procédé selon l'une quelconque des revendications 12 à 13, dans lequel les dispositifs optiques (1, 2, 3, 19, 106, 107) sont pourvus de manière réglable dans une trame (4, 90) pour calibrer in-situ l'anémométrie de vitesse de vent dans les souffleries et des anémomètres à coupes et soniques (62, 72) montés dans un espace ouvert.

Fig. 1

Fig. 2

Fig. 3

Fig. 4

Fig. 5

Fig. 6

Fig. 7

Fig. 8

EP 2 795 344 B1

EP 2 795 344 B1

Fig. 9

EP 2 795 344 B1

Fig. 10

Fig. 11

**REFERENCES CITED IN THE DESCRIPTION**

**Patent documents cited in the description**

- WO 2009134221 A
- WO 09134221 A1
- WO 03048804 A1

- US 2011106324 A
- US 6646725 B